# EUROPEAN PATENT SPECIFICATION

(11) **EP 3 432 413 B1**
(45) Date of publication and mention of the grant of the patent: **04.09.2019**
(21) Application number: 17182543.3
(22) Date of filing: 21.07.2017
(51) Int. Cl.: H01P 1/12

(54) **ROTARY SWITCH FOR LOW PASSIVE INTERMODULATION CONNECTION**
DREHSCHALTER FÜR VERBINDUNG MIT NIEDRIGER PASSIVER INTERMODULATION
COMMUTATEUR ROTATIF POUR CONNEXION D'INTERMODULATION PASSIVE FAIBLE

(43) Date of publication of application: 23.01.2019
(73) Proprietor: Spinner GmbH, 80335 München (DE)
(72) Inventor: Graßl, Martin, 85435 Erding (DE); Hupfauer, Georg, 83620 Westerham (DE)
(74) Representative: Lohr, Jöstingmeier & Partner

(56) References cited:
- EP-A1- 3 048 664
- DE-A1- 1 916 102
- GB-A- 2 187 599

## Description

### Field of the invention

The invention relates to a low passive intermodulation radio frequency rotary switch for switching coaxial lines. Such switches may be used in test equipment, which preferably is used for intermodulation measurement.

### Description of the related art

For performing tests and measurements in RF (radio frequency) equipment, it is often required to switch individual coaxial lines.

US 4967174 A discloses a rotating coaxial switch. This switch lifts the switching circuitry before rotating. This allows to increase contact force after a switching has been performed. In such switches the passive intermodulation decreases with increasing contact force. Unfortunately, there are mechanical limits of the contact force and therefore the reduction of passive intermodulation is limited. Furthermore, with wear of the contacts, the intermodulation increases. Accordingly, this switch has a limited lifetime.

EP 3 048 664 A1 discloses a coaxial rotary switch with capacitive coupling contacts for low passive intermodulation connection.

### Summary of the invention

The problem to be solved by the invention is to provide a RF switch for switching coaxial, which offers a very low passive intermodulation (PIM). Furthermore, the switch should require low maintenance and should have an extended lifetime.

Solutions of the problem are described in the independent claim. The dependent claims relate to further improvements of the invention.

In a first embodiment, a low passive intermodulation (PIM) switch comprises four ports which may be connected by switching elements in a predetermined manner. The switching elements are rotated about a rotation axis and interact with stationary coupling elements, forming a capacitive coupled switch. The capacitive coupled switch does not have any mechanical or galvanic contacts and therefore does not generate any passive intermodulation of RF signals. In an alternate embodiment, the switching elements may be moved between alternate positions, preferably by a linear movement. The basic switching function is independent of the specific movement. Therefore, switches may be based on a linear or any other kind of displacement of the pads. In such an embodiment, all terms which are related to rotation or rotatable should mean movement or movable. In a preferred embodiment, the switch is a rotatable switch for alternatingly connecting four ports. The ports have RF connectors to preferably be connected to any kind of test equipment, like a network analyzer, a load, or any other device. It is further preferred, if the coaxial connectors are also low PIM connectors. The coaxial connectors are connected via coaxial center conductors to at least one stationary pad for capacitively coupling an RF signal. Preferably, the center conductors may comprise solid or hollow metal tubes or rods. In another embodiment, they may also be structures like striplines on a dielectric carrier like a printed circuit board. Preferably, there are two pads connected to each center conductor. At the rotatable part, there is at least one rotatable pad interfacing with at least one stationary pad. It is further preferred to have two stationary pads, most preferably one stationary pad above a rotatable pad and the second stationary pad under a rotatable pad. It is further preferred, if two rotatable pads are connected by a bridge. The bridge preferably provides an electrical and mechanical connection between the pads, and most preferably is mechanically connected to a shaft for guiding or rotating the bridge together with the pads. An RF signal coming from a first coaxial connector is coupled via a first center conductor to at least a first stationary pad. From the stationary pad, the signal is coupled to a rotatable pad from which it is guided by the bridge to a second rotatable pad to couple the signal to at least one second stationary pad, and via a second center conductor to a second coaxial connector. In a first embodiment, there are four ports, each port having a coaxial connector, a center conductor, and at least one, preferably two stationary pads. A rotor has two sets of rotatable pads, whereas a first rotatable pad is coupled to a second rotatable pad via a first bridge, and a third rotatable pad is coupled to a fourth rotatable pad via a second bridge.

Although the rotatable pads may rotate continuously, there are certain positions where at least one rotatable pad overlaps with at least one stationary pad, and preferably overlaps in a centered manner, such that the overlapping surface is maximized. At maximum overlap, there is the highest coupling capacitance, and therefore the best coupling between the stationary and the rotatable pads. In the above embodiment, having four ports with four stationary pads and four rotatable pads, there are four discrete positions with maximum overlap of the pads. In a preferred embodiment, the stationary pads and the rotatable pads are arranged under angles of 90° centered around the rotation axis of the rotor. Accordingly, the four discrete positions for maximum coupling are 90° distant from each other.

In a further preferred embodiment, at least one movable pad and/or at least one pad bridge is movable and/or displacable. Most preferably, at least one movable pad and/or at least one pad bridge is displaceable parallel to a plane defined by the pad or tiltable from a plane defined by the pad. Preferably, a pad bridge has two ends, each end holding a movable pad.

By the displacement an/or tilt, mechanical tolerances of the stationary pads may be compensated. This allows the stationary pads to be built from a stiff (and not elastic or spring material) material forming the pad sections. A stiff material with a predefined distance of the stationary pad sections results in a precisely defined coupling capacitance between the rotatable pads and the stationatry pads, further resulting in more reproduceable and improved coupling characteristics. Furthermore, the gap (distance) between the stationary pad sections can be minimized, such that the movable parts fit in between precisely, resulting in a significantly improved coupling capacitance. The remaining gap between two stationary pad sections and a movable pad in between may be in a range of 0,5 mm to 0,005 most preferably between 0,05 mm and 0,1 mm.

It is further preferred to have a symmetrical arrangement of the stationary pads and to have symmetrical arrangement of the two sets of rotatable pads, as each set has two pads connected by a bridge. The switch of this embodiment has the following states:

| **state** | **port 1** | **port 2** | **port 3** | **port 4** |
|---|---|---|---|---|
| 1 | X | X | Y | Y |
| 2 | Y | X | X | Y |
| 3 | Y | Y | X | X |
| 4 | X | Y | Y | X |

The letters X refer to a connection of the ports by means of the first set of rotatable pads, while the letters Y relate to connection of the ports by the second set of rotatable pads.

In a preferred embodiment, there is at least one ridge of conductive material between adjacent stationary pads. Such a ridge may be at the bottom and/or at the top of the housing. The ridge increases isolation between the stationary pads and therefore between the ports.

Preferably, the movable pads have an arc shaped outer contour which may be limited by a common circle for all movable pads. By this way, the movable pads may rotate in close proximity to an inner contour (which may be straight or arc shaped) of the stationary pads, which further increases coupling capacitance.

In a further embodiment, at least one movable pad bridge, which may be the first and/or second pad bridge is narrower than the least one movable pad. This may result in lower capacitance to ground as the ridges are closer to the bridge than the sidewalls.

It is obvious that, although an embodiment as shown above is preferred, there may be any other number of ports and/or pads at the rotatable part.

It is further preferred to have a drive means which may be a motor, preferably a stepping motor or a solenoid, which may further be coupled by means of a gear to the rotatable part. It is further preferred to have a position sensor to indicate the region of certain discrete coupling positions and/or to indicate which coupling position has been reached. There may also be a position indicator which indicates either the individual positions and/or the switching state of the switch. Basically, a switch as mentioned above having four ports has two switching states, as the states 1 and 3 as well as 2 and 4, as shown in the table above, connect the same ports.

In a further preferred embodiment, the shaft is made of plastic material, although it may also be made of any other non-conductive material, like ceramics. It is further preferred, if a plurality stationary pads form a gap such that the rotatable pads fit in-between with a very low air gap to obtain a maximum coupling capacity. In an alternate embodiment, a plurality of rotatable pads form a gap such that stationary pads fit in-between. In another embodiment there may be any number of rotating or stationary pads which are geared together. To avoid a galvanic contact between the rotatable and stationary pads, it is preferred to coat the pads with a specific non-contacting paint, which may for example be an epoxy material. Furthermore, the pads may have an anodized isolating layer, or there may be any plastic material, like a sheet of PTFE in-between the pads.

In a preferred embodiment, each or at least one pad is in a plane orthogonal to the rotation axis. The planes of different pads may be displaced to each other for allowing the pads to move as described herein. In another embodiment, each pad may be on a circular cylinder surface centered to the rotation axis.

### Description of Drawings

In the following the invention will be described by way of example, without limitation of the general inventive concept, on examples of embodiment with reference to the drawings.
Figure 1 shows a perspective view of a preferred embodiment.
Figure 2 shows a top view.
Figure 3 shows a sectional view from the top.
Figure 4 shows a sectional side view.
Figure 5 shows details of the electrical components.
Figure 6 shows further details of the electrical components.
Figure 7 shows details of connected rotatable pads.
Figure 8 shows further details of connected rotatable pads.
Figure 9 shows a full assembly of a preferred embodiment.
Figure 10 shows an embodiment with tiltable pads.
Figure 11 shows an embodiment with tilted pads.
Figure 12 shows an embodiment with tiltable pads in a top view.
Figure 13 shows a section of the pads.

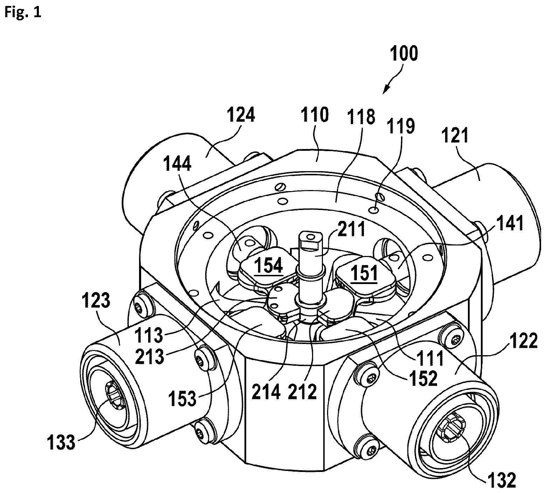

In Figure 1, a perspective view of a preferred embodiment of a rotary switch is shown. The basic switching function is independent of the specific movement. Therefore, switches may be based on a linear or any other kind of displacement of the pads. A rotary switch 100 comprises a housing 110 for holding and enclosing the electrical components. At the housing, there are a first coaxial connector 121, a second coaxial connector 122, a third coaxial connector 123, and a fourth coaxial connector 124. For contacting, the coaxial connectors have center conductors. The first coaxial connector has a center conductor 131 (which will be shown later), the second coaxial connector has a center conductor 132, the third coaxial connector has a center conductor 133, and the fourth coaxial connector has a center conductor 134 (which will be shown later). The center conductors of the coaxial connectors are connected to respective center conductors of the switch (141, 142, 143, 144). At the end of the switch center conductors, there are stationary pads, whereas always one primary stationary pad section is combined with a secondary stationary pad section, forming a contact fork. A first primary stationary pad section 151 and a first secondary stationary pad section 161 are connected to the first center conductor 141. The other stationary pads (152, 162; 153, 163; 154, 164) are connected in the same way to their respectively center conductors 141, 142, 143, 144. For switching, rotatable pads, which will be shown in more detail later, are provided in-between the stationary pads, thus forming a coupling capacitance between the stationary and the rotatable pads. Details of the rotor will be shown and explained in the following Figures.

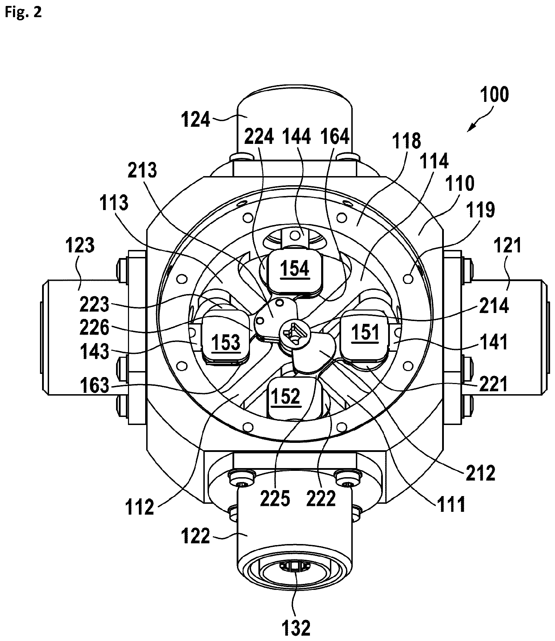

In Figure 2, a top view of a first embodiment is shown. Basically, here the same components as in the previous Figure may be seen. Due to the different viewing angle, a first support 111, a second support 112, a third support 113, and a fourth support 114, all supporting a shaft 211 for driving the rotatable pads, are shown. There may be a recess 118 and threaded holes 119 for holding and fixing a cover and a drive motor to the unit.

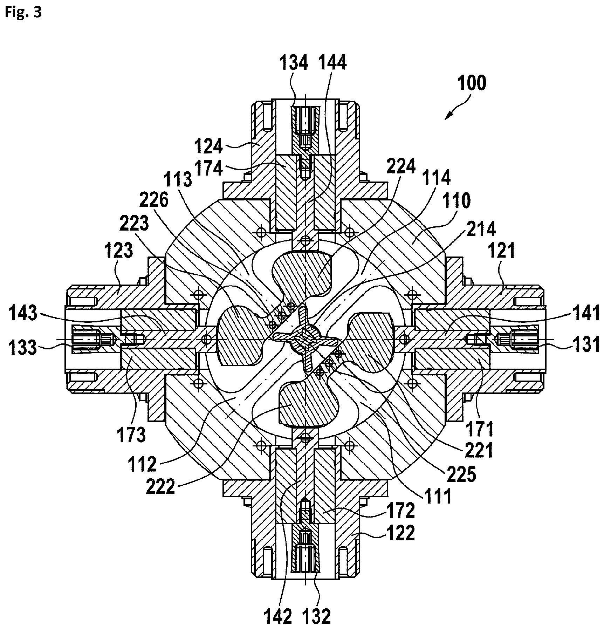

In Figure 3, a sectional view of the first embodiment is shown. It shows a cut through a plane defined by the rotatable pads. Accordingly, the rotatable pads 221, 222, 223, 224 can be seen clearly. The first rotatable pad 221 and the second rotatable pad 222 are electrically and mechanically connected by a first rotatable pad bridge 225. The third rotatable pad 223 and the fourth rotatable pad 224 are electrically and mechanically connected by the second rotatable pad bridge 226. This Figure shows further details of the coaxial connectors and the center conductors of the switch, which previously were mentioned. The center conductors are held by isolators 171, 172, 173, 174, which preferably comprise a dielectric material, like a plastic material, and most preferably like PTFE or polyethylene.

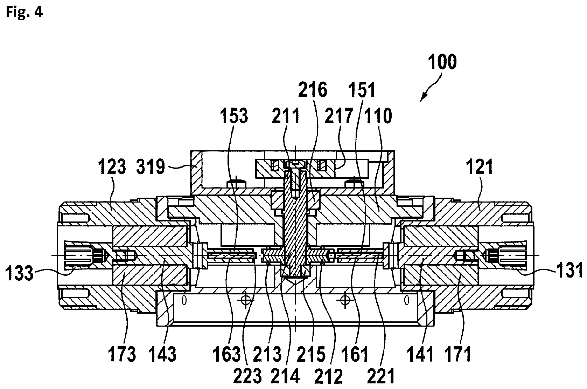

In Figure 4, a sectional side view in a plane going through the center of the first center conductor and the third center conductor is shown. Here, the fork-shaped arrangement of the primary stationary pad sections and secondary stationary pad sections can be seen by way of the examples of the primary stationary pad section 151 and first secondary stationary pad section 161 enclosing first rotatable pads 221. The rotatable parts are driven by a drive shaft 211, to which a first bridge holder 212 and second bridge holder 213 are attached. There may be at least one bearing, preferably a first bearing 215 at the bottom of the drive shaft, and a second bearing 216 at the top of the drive shaft. To allow easy disassembly of the unit, the drive shaft may comprise several parts. For example, there may be a drive shaft receptacle 214 comprising the lower section of the drive shaft, which is holding the bridge holders and into which an upper section of the drive shaft may be plugged or connected. Furthermore, the drive shaft may be operated by a drive lever 217.

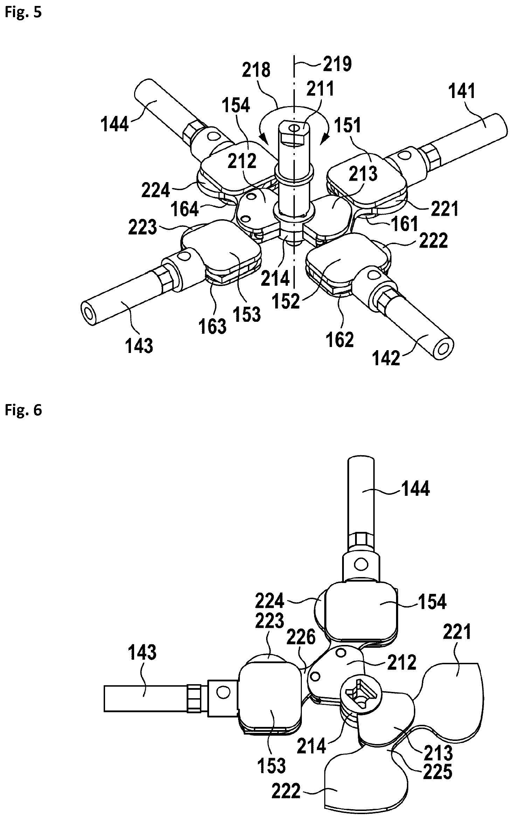

In Figure 5, details of the electrical components are shown. Here, the stationary and the rotatable pads can be seen in detail. The rotatable pads may be moved by rotating the drive shaft 211, as shown by arrow 218. Although the drive shaft 211 together with the rotatable pads may be continuously rotated about 360°, it is preferred that there are discrete positions in which the rotation is stopped. Such a position is shown in this Figure, where the rotatable pads completely or almost completely overlap with the stationary pads, as this results in a maximum coupling capacitance between the rotatable and stationary pads. The drive shaft defines a rotation axis 219. The position of the drive shaft and the rotatable pads shown in here is a first switching position. In this first switching position, the first center conductor 141 is connected to the second center conductor 142 via first stationary pads 151, 161 coupled to first rotatable pad 221, further connected via first bridge holder 212 to the second rotatable pad 222, which is further capacitively coupled to second primary stationary pad section 152 and second secondary stationary pad section 162. Furthermore, third center conductor 143 is connected to fourth center conductor 144 in a similar way. When rotating the drive shaft 211 for example 90° clockwise, the second center conductor 142 is connected to third center conductor 143, and fourth center conductor 144 is connected to first center conductor 141. If the drive shaft and the rotatable pads are further rotated by 90°, again as in the first position first center conductor 141 is connected to second center conductor 142 and third center conductor 143 is connected to fourth center conductor 144. Here, only the rotatable pads and the corresponding bridges are exchanged, but the function is basically the same. The same applies if the drive shaft rotates for further 90°, which results in a connection scheme of this fourth position, which is the same as in the second position. Rotating the drive shaft by further 90° will result in the first position.

In Figure 6, further details of the electrical components can be seen, as the stationary parts, like the stationary pads 151 and 152 are removed in this Figure.

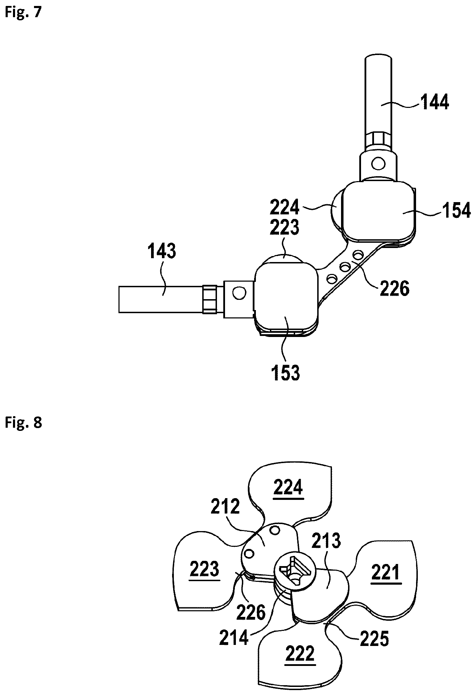

In Figure 7, details of connected rotatable pads are shown. The pads are connected by a second rotatable pad bridge 226, which may have some holes for fixing the bridge 226 to the second bridge holder 213.

In Figure 8, further details of connected rotatable pads are shown.

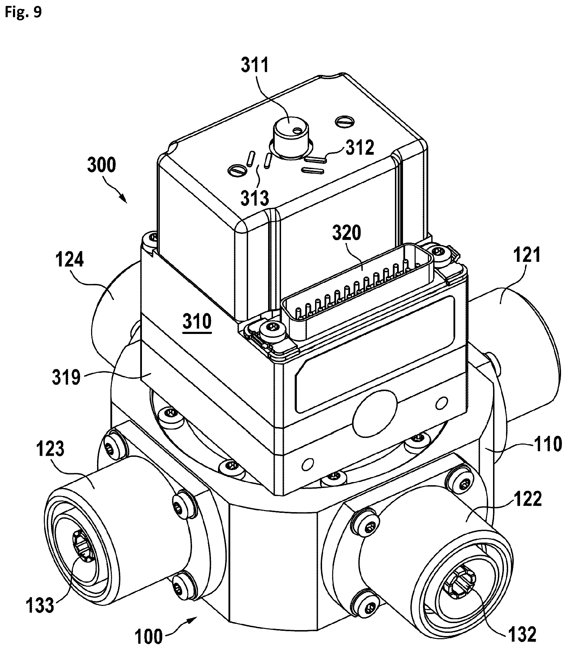

In Figure 9, a full assembly of a preferred embodiment is shown. In addition to the previously shown switch components, a drive unit 300 is mounted to the top of the switch. It comprises of a motor housing 310, which preferably has a position indicator 311, showing the basic position of the switch, which is either at a first position mark 312 or at a second position mark 313. There may be a bottom shell 319 which is further mounted to the switch housing and a drive control connector 320 which may provide drive control and position feedback signals to and from the drive unit.

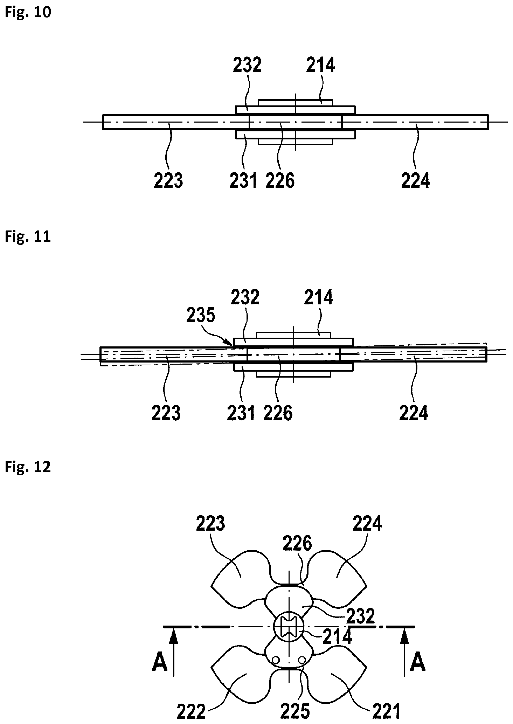

In Figure 10, an embodiment with tiltable pads is shown. A bridge holder comprises a top section 232 and a bottom section 231, preferably further connected to the drive shaft receptable 214. Both sections hold pad bridge 226 which further holds and connects the third pad 223 and fourth pad 224. The gap between the top section and bottom section is larger than the thickness of the pad bridge, such that the pad bridge may be displaced and/or tilted.

Figure 11 shows the same embodiment as above in a tilted state (dashed lines). There may be elastic spacers 235 between the top section and the pad bridge as well as between the pad bridge and the bottom section. Preferably, the displacement and/or tilt angle are limited. A preferred range of displacement is in a range between 0.05 mm and 0.5 mm, most preferably 0,15 mm in either direction. A preferred angle of tilt is in a range between 0,5° and 5°, most preferably 1,5°.

In Figure 12 a reference drawing is shown. Its indicated section A-A is shown in figures 10 and 11.

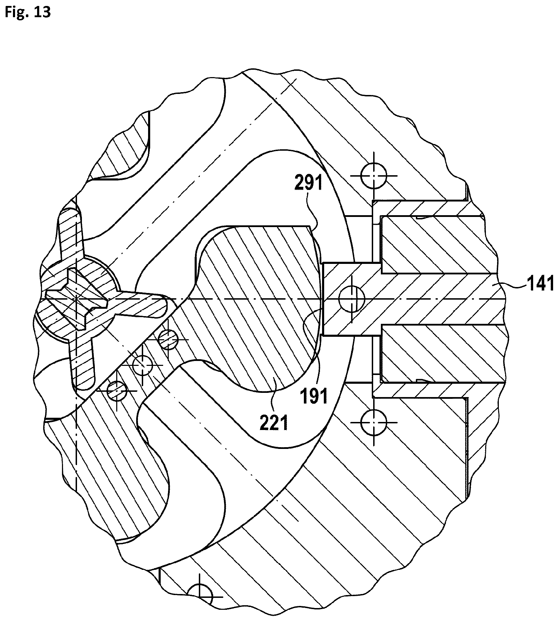

In figure 13, a section of the pads is shown. Movable pad 221 has an arc shaped outer contour 291 matching to the inner contour 191 (which may be straight or arc shaped) of stationary pad 191. Preferably, there is only a small gap between the movable pad and the stationary pad which results in an increased coupling capacitance. Almost hidden below the movable pad 221 is the stationary pad 161.

### List of reference numerals

- 100: rotary switch
- 110: housing
- 111: first support
- 112: second support
- 113: third support
- 114: fourth support
- 118: recess
- 119: threaded hole
- 121: first coaxial connector
- 122: second coaxial connector
- 123: third coaxial connector
- 124: fourth coaxial connector
- 131: first coaxial connector center conductor
- 132: second coaxial connector center conductor
- 133: third coaxial connector center conductor
- 134: fourth coaxial connector center conductor
- 141: first center conductor
- 142: second center conductor
- 143: third center conductor
- 144: fourth center conductor
- 151: first primary stationary pad section
- 152: second primary stationary pad section
- 153: third primary stationary pad section
- 154: fourth primary stationary pad section
- 161: first secondary stationary pad section
- 162: second secondary stationary pad section
- 163: third secondary stationary pad section
- 164: fourth secondary stationary pad section
- 171: first insulator
- 172: second insulator
- 173: second insulator
- 174: second insulator
- 211: drive shaft
- 212: first bridge holder
- 213: second bridge holder
- 214: drive shaft receptacle
- 215: first bearing
- 216: second bearing
- 217: drive lever
- 218: rotation of drive shaft
- 219: rotation, center axis
- 221: first rotatable pad
- 222: second rotatable pad
- 223: third rotatable pad
- 224: fourth rotatable pad
- 225: first rotatable pad bridge
- 226: second rotatable pad bridge
- 231: bridge holder top section
- 232: bridge holder bottom section
- 235: spacers
- 300: drive unit
- 310: motor housing
- 311: position indicator
- 312: first position mark
- 313: second position mark
- 319: bottom shell
- 320: drive control connector

## Claims

1. Low passive intermodulation (PIM) RF switch comprising:
a first center conductor (141) connected to at least one first stationary pad (151, 161),
a second center conductor (142) connected to at least one second stationary pad (152, 162),
at least a first movable pad (221) and at least a second movable pad (222), the at least one first movable pad (221) and the at least one second movable pad (222) are electrically and mechanically connected together by a first movable pad bridge (225) which is further connected mechanically to a drive means (211) moving about a center axis (219),
wherein
in a first coupling state, the at least one first stationary pad (151, 161) is in close proximity to the at least one first movable pad (221) and the at least one second stationary pad (152, 162) is in close proximity to the at least one second movable pad (222), achieving a capacitive coupling between the at least one first stationary pad and the at least one first movable pad, as well as between the at least one second stationary pad and the at least one second movable pad, thus generating an RF signal connection between the first center conductor and the second center conductor via the stationary and movable pads,
and to avoid a galvanic contact between the rotatable and stationary pads, the pads are coated with a specific non-contacting paint of an epoxy material or the pads have an anodized isolating layer or there is any plastic material, like a sheet of PTFE in-between the pads, and
at least one movable pad (221, 222, 223, 224) is displaceable parallel to a plane defined by the pad,
**characterized in, that** at least one movable pad (221, 222, 223, 224) is tiltable from a plane defined by the pad.

2. Low passive intermodulation (PIM) RF switch according to claim 1 comprising:
at least a third center conductor (143) connected to at least one third stationary pad (153, 163),
a fourth center conductor (144) connected to at least one fourth stationary pad (154, 164),
at least a third movable pad (223) and at least a fourth movable pad (224), the at least one third movable pad (223) and the at least one fourth movable pad (224) are electrically and mechanically connected together by a second movable pad bridge (226) which is further connected mechanically to a drive means (211) moving about a center axis (219),
the at least one third stationary pad (153, 163) is in close proximity to the at least one third movable pad (223) and the fourth stationary pad (154, 164) is in close proximity to the at least one fourth movable pad (224), achieving a capacitive coupling between the at least one third stationary pad and the at least one third movable pad, as well as between the at least one fourth stationary pad and the at least one fourth movable pad, thus generating an RF signal connection between the third center conductor and the fourth center conductor via the stationary and movable pads,
and to avoid a galvanic contact between the rotatable and stationary pads, the pads are coated with a specific non-contacting paint of an epoxy material or the pads have an anodized isolating layer or there is any plastic material, like a sheet of PTFE in-between the pads.

3. Low passive intermodulation (PIM) RF switch according to claim 2,
**characterized in, that**
in a second coupling state, the at least one second stationary pad (152, 162) is in close proximity to the at least one first movable pad (221) and the at least one third stationary pad (153, 163) is in close proximity to the at least one second movable pad (222), achieving a capacitive coupling between the at least one second stationary pad and the at least one first movable pad, as well as between the at least one third stationary pad and the at least one second movable pad, thus generating an RF signal connection between the second center conductor and the third center conductor via the stationary and movable pads,
the at least one fourth stationary pad (154, 164) is in close proximity to the at least one third movable pad (223) and the first stationary pad (151, 161) is in close proximity to the at least one fourth movable pad (224), achieving a capacitive coupling between the at least one fourth stationary pad and the at least one third movable pad, as well as between the at least one first stationary pad and the at least one fourth movable pad, thus generating an RF signal connection between the fourth center conductor and the first center conductor via the stationary and movable pads.

4. Low passive intermodulation (PIM) RF switch according to claim 1,
**characterized in, that**
the at least first movable pad (221) and the at least second movable pad (222) are rotatable pads.

5. Low passive intermodulation (PIM) RF switch according to claim 2 or claim 3,
**characterized in, that**
the at least first movable pad (221), the at least a second movable pad (222), the at least third movable pad (223) and the at least a fourth movable pad (224) are rotatable pads.

6. Low passive intermodulation (PIM) RF switch according to claim 4 or 5,
**characterized in, that**
each or at least one pad or pad section is in a plane orthogonal to the rotation axis.

7. Low passive intermodulation (PIM) RF switch according to any one of the previous claims,
**characterized in, that**
the first movable pad bridge (225) is narrower than the at least one first movable pad (221) and the at least one second movable pad (222).

8. Low passive intermodulation (PIM) RF switch according to any one of the claims 2, 3, 5or 6,
**characterized in that**
the second movable pad bridge (226) is narrower than the at least one third movable pad (223) and the at least one fourth movable pad (224).

9. Low passive intermodulation (PIM) RF switch according to any one of the previous claims,
**characterized in, that**
at least one primary stationary pad section (151, 152, 153, 154) and at least one secondary stationary pad section (161, 162, 163, 164) is connected to at least one center conductor (141, 142, 143, 144) forming a gap for at least one movable pad (221, 222, 223, 224).

10. Low passive intermodulation (PIM) RF switch according to any one of the claims 1 to 8,
**characterized in, that**
at least two movable pads (221, 222, 223, 224) form a gap for at least one stationary pad (151, 152, 153, 154, 161, 162, 163, 164).

11. Low passive intermodulation (PIM) RF switch according to any one of the previous claims,
**characterized in, that**
the movable pads have an arc shaped outer contour matching to an inner contour of the stationary pads.

12. Low passive intermodulation (PIM) RF switch according to claim 1,
**characterized in, that**
at least one ridge is provided at the housing between two stationary pads.

13. Low passive intermodulation (PIM) RF switch according to any one of the previous claims,
**characterized in, that**,
a drive unit (300) is provided for driving rotating the drive means (211).

14. Low passive intermodulation (PIM) RF switch according to claim 13,
**characterized in, that**
the drive unit (300) includes at least one of a motor, a stepping motor, or a solenoid.

15. Low passive intermodulation (PIM) RF switch according to claim 13 or 14,
**characterized in, that**
the drive unit (300) includes a position sensor to indicate the region of certain discrete coupling positions and/or to indicate which coupling position has been reached.

16. Low passive intermodulation (PIM) RF switch according to claim 13, 14 or 15,
**characterized in, that**
the drive unit (300) includes a position indicator (311) which indicates either the individual positions and/or the switching state of the switch.

## Patentansprüche

1. HF-Schalter mit niedriger passiver Intermodulation (PIM) umfassend:
einen ersten Mittenleiter (141), der mit mindestens einem ersten stationären Pad (151, 161) verbunden ist,
einen zweiten Mittenleiter (142), der mit mindestens einem zweiten stationären Pad (152, 162) verbunden ist,
mindestens ein erstes bewegliches Pad (221) und mindestens ein zweites bewegliches Pad (222),
wobei das mindestens eine erste bewegliche Pad (221) und das mindestens eine zweite bewegliche Pad (222) elektrisch und mechanisch miteinander verbunden sind durch eine erste bewegliche Pad-Brücke (225), die weiterhin mechanisch mit einem um eine Mittelachse (219) beweglichen Antriebsmittel (211) verbunden ist,
wobei
in einem ersten Kopplungszustand sich das mindestens eine erste stationäre Pad (151, 161) in unmittelbarer Nähe zu dem mindestens einen ersten beweglichen Pad (221) befindet und das mindestens eine zweite stationären Pad (152, 162) sich in unmittelbarer Nähe zu dem mindestens einen zweiten beweglichen Pad (222) befindet, wodurch eine kapazitive Kopplung zwischen dem mindestens einen ersten stationären Pad und dem mindestens einen ersten beweglichen Pad, ebenso wie zwischen dem mindestens einen zweiten stationären Pad und dem mindestens einen zweiten beweglichen Pad erreicht wird, wodurch eine HF-Signalverbindung zwischen dem ersten Mittelleiter und dem zweiten Mittelleiter über die stationären und beweglichen Pads erzeugt wird,
und um einen galvanischen Kontakt zwischen den rotierbaren und stationären Pads zu vermeiden, die Pads mit einer spezifischen nicht-kontaktierenden Lackierung aus einem Epoxy-Material beschichtet sind, oder die Pads eine anodisierte isolierende Beschichtung haben oder ein beliebiges Kunststoffmaterial, wie ein Blatt aus PTFE, zwischen den Pads vorhanden ist, und
mindestens ein bewegliches Pad (221, 222, 223, 224) parallel zu einer durch das Pad definierten Ebene verschiebbar ist,
**dadurch gekennzeichnet, dass** mindestens ein bewegliches Pad (221, 222, 223, 224) aus einer durch das Pad definierten Ebene kippbar ist.

2. HF-Schalter mit niedriger passiver Intermodulation (PIM) nach Anspruch 1, umfassend:
mindestens einen dritten Mittelleiter (143), der mit mindestens einem dritten stationären Pad verbunden (153, 163) ist,
einen vierten Mittelleiter (144), der mit mindestens einem vierten stationären Pad (154, 164) verbunden ist,
mindestens ein drittes bewegliches Pad (223) und mindestens ein viertes bewegliches Pad (224),
wobei das mindestens eine dritte bewegliche Pad (223) und das mindestens eine vierte bewegliche Pad (224) elektrisch und mechanisch miteinander verbunden sind durch eine zweite bewegliche Pad-Brücke (226), die weiterhin mechanisch mit einem um eine Mittelachse (219) beweglichen Antriebsmittel (211) verbunden ist,
wobei sich das mindestens eine dritte stationäre Pad (153, 163) in unmittelbarer Nähe zu dem mindestens einen dritten beweglichen Pad (223) befindet und das vierte stationäre Pad (154, 164) sich in unmittelbarer Nähe zu dem mindestens einen vierten beweglichen Pad (224) befindet, wodurch eine kapazitive Kopplung zwischen dem mindestens einen dritten stationären Pad und dem mindestens einen dritten beweglichen Pad, sowie zwischen dem mindestens einen vierten stationären Pad und dem mindestens einen vierten beweglichen Pad erreicht wird, wodurch eine HF-Signalverbindung zwischen dem dritten Mittelleiter und dem vierten Mittelleiter über die stationären und beweglichen Pads erzeugt wird,
und um einen galvanischen Kontakt zwischen den rotierbaren und stationären Pads zu vermeiden, die Pads mit einer spezifischen nicht-kontaktierenden Lackierung aus einem Epoxy-Material beschichtet sind, oder die Pads eine anodisierte isolierende Beschichtung haben oder ein beliebiges Kunststoffmaterial, wie ein Blatt aus PTFE, zwischen den Pads vorhanden ist.

3. HF-Schalter mit niedriger passiver Intermodulation (PIM) nach Anspruch 2,
**dadurch gekennzeichnet, dass**
in einem zweiten Kopplungszustand das mindestens eine zweite stationäre Pad (152, 162) sich in unmittelbarer Nähe zu dem mindestens einen ersten beweglichen Pad (221) befindet und das mindestens eine dritte stationäre Pad (153, 163) sich in unmittelbarer Nähe zu dem mindestens einen zweiten beweglichen Pad (222) befindet, wodurch eine kapazitive Kopplung zwischen dem mindestens einen zweiten stationären Pad und dem mindestens einen ersten beweglichen Pad, sowie zwischen dem mindestens einen dritten stationären Pad und dem mindestens einen zweiten beweglichen Pad erreicht wird, wodurch eine HF-Signalverbindung zwischen dem zweiten Mittelleiter und dem dritten Mittelleiter über die stationären und beweglichen Pads erzeugt wird,
das mindestens eine vierte stationäre Pad (154, 164) sich in unmittelbarer Nähe zu dem mindestens einen dritten beweglichen Pad (223) befindet und das erste stationäre Pad (151, 161) sich in unmittelbarer Nähe zu dem mindestens einen vierten beweglichen Pad (224) befindet, wodurch eine kapazitive Kopplung zwischen dem mindestens einen vierten stationären Pad und dem mindestens einen dritten beweglichen Pad, sowie zwischen dem mindestens einen ersten stationären Pad und dem mindestens einen vierten beweglichen Pad erreicht wird, wodurch eine HF-Signalverbindung zwischen dem vierten Mittelleiter und dem ersten Mittelleiter über die stationären und beweglichen Pads erzeugt wird.

4. HF-Schalter mit niedriger passiver Intermodulation (PIM) nach Anspruch 1,
**dadurch gekennzeichnet, dass**
das mindestens eine erste bewegliche Pad (221) und das mindestens eine zweite bewegliche Pad (222) rotierbare Pads sind.

5. HF-Schalter mit niedriger passiver Intermodulation (PIM) nach Anspruch 2 oder 3,
**dadurch gekennzeichnet, dass**
das mindestens eine erste bewegliche Pad (221), das mindestens eine zweite bewegliche Pad (222), das mindestens eine dritte bewegliche Pad (223) und das mindestens eine vierte bewegliche Pad (224) rotierbare Pads sind.

6. HF-Schalter mit niedriger passiver Intermodulation (PIM) nach Anspruch 4 oder 5,
**dadurch gekennzeichnet, dass**
jedes/r der/s mindestens einen Pads oder Pad-Abschnitts in einer Ebene orthogonal zur Rotationsachse ist.

7. HF-Schalter mit niedriger passiver Intermodulation (PIM) nach einem der vorhergehenden Ansprüche,
**dadurch gekennzeichnet, dass**
die erste bewegliche Pad-Brücke (225) schmäler ist als das mindestens eine erste bewegliche Pad (221) und das mindestens eine zweite bewegliche Pad (222).

8. HF-Schalter mit niedriger passiver Intermodulation (PIM) nach einem der Ansprüche 2, 3, 5 oder 6,
**dadurch gekennzeichnet, dass**
die zweite bewegliche Pad-Brücke (226) schmäler ist als das mindestens eine dritte bewegliche Pad (223) und das mindestens eine vierte bewegliche Pad (224).

9. HF-Schalter mit niedriger passiver Intermodulation (PIM) nach einem der vorhergehenden Ansprüche,
**dadurch gekennzeichnet, dass**
mindestens ein primärer stationärer Pad-Abschnitt (151, 152, 153, 154) und mindestens ein sekundärer stationärer Pad-Abschnitt (161, 162, 163, 164) mit mindestens einem Mittelleiter (141, 142, 143, 144) verbunden sind und einen Spalt für mindestens ein bewegliches Pad (221, 222, 223, 224) bilden.

10. HF-Schalter mit niedriger passiver Intermodulation (PIM) nach einem der Ansprüche 1 bis 8,
**dadurch gekennzeichnet, dass**
mindestens zwei bewegliche Pads (221, 222, 223, 224) einen Spalt für mindestens ein stationäres Pad (151, 152, 153, 154, 161, 162, 163, 164) bilden.

11. HF-Schalter mit niedriger passiver Intermodulation (PIM) nach einem der vorhergehenden Ansprüche,
**dadurch gekennzeichnet, dass**
die beweglichen Pads eine bogenförmige Außenkontur haben, die mit einer Innenkontur der stationären Pads zusammenpasst.

12. HF-Schalter mit niedriger passiver Intermodulation (PIM) nach Anspruch 1,
**dadurch gekennzeichnet, dass**
mindestens ein Steg an dem Gehäuse zwischen zwei stationären Pads vorgesehen ist.

13. HF-Schalter mit niedriger passiver Intermodulation (PIM) nach einem der vorhergehenden Ansprüche,
**dadurch gekennzeichnet, dass**
eine Antriebseinheit (300) zum Antreiben oder Rotieren des Antriebsmittels (211) vorgesehen ist.

14. HF-Schalter mit niedriger passiver Intermodulation (PIM) nach Anspruch 13,
**dadurch gekennzeichnet, dass**
die Antriebseinheit (300) zumindest eines von einem Motor, einem Schrittmotor oder einem Solenoid beinhaltet.

15. HF-Schalter mit niedriger passiver Intermodulation (PIM) nach Anspruch 13 oder 14,
**dadurch gekennzeichnet, dass**
die Antriebseinheit (300) einen Positionssensor beinhaltet, um den Bereich bestimmter diskreter Kopplungspositionen anzuzeigen und/oder um anzuzeigen, welche Kopplungsposition erreicht wurde.

16. HF-Schalter mit niedriger passiver Intermodulation (PIM) nach Anspruch 13, 14 oder 15,
**dadurch gekennzeichnet, dass**
die Antriebseinheit (300) eine Positionsanzeige (311) beinhaltet, die entweder die einzelnen Positionen und/oder den Schaltzustand des Schalters anzeigt.

## Revendications

1. Commutateur RF à intermodulation passive (PIM) basse comprenant :
un premier conducteur central (141) connecté à au moins une première plaquette stationnaire (151, 161),
un deuxième conducteur central (142) connecté à au moins une deuxième plaquette stationnaire (152, 162),
au moins une première plaquette mobile (221) et au moins une deuxième plaquette mobile (222),
l'au moins une première plaquette mobile (221) et l'au moins une deuxième plaquette mobile (222) sont connectées ensemble électriquement et mécaniquement par un premier pont de plaquette mobile (225) qui est en outre connecté mécaniquement à un moyen d'entraînement (211) se déplaçant autour d'un axe central (219),
dans lequel
dans un premier état de couplage, l'au moins une première plaquette stationnaire (151, 161) se trouve à proximité étroite de l'au moins une première plaquette mobile (221) et l'au moins une deuxième plaquette stationnaire (152, 162) se trouve à proximité étroite de l'au moins une deuxième plaquette mobile (222), créant un couplage capacitif entre l'au moins une première plaquette stationnaire et l'au moins une première plaquette mobile, ainsi qu'entre l'au moins une deuxième plaquette stationnaire et l'au moins une deuxième plaquette mobile, générant ainsi une connexion par signal RF entre le premier conducteur central et le deuxième conducteur central via les plaquettes stationnaires et mobiles,
et pour éviter un contact galvanique entre les plaquettes rotatives et stationnaires, les plaquettes sont revêtues d'une peinture sans contact spécifique d'un matériau époxy ou les plaquettes ont une couche isolante anodisée ou il y a un quelconque matériau plastique, tel qu'une feuille de PTFE entre les plaquettes, et
au moins une plaquette mobile (221, 222, 223, 224) est déplaçable parallèlement à un plan défini par la plaquette,
**caractérisé en ce qu'**au moins une plaquette mobile (221, 222, 223, 224) est inclinable depuis un plan défini par la plaquette.

2. Commutateur RF à intermodulation passive (PIM) basse selon la revendication 1, comprenant :
au moins un troisième conducteur central (143) connecté à au moins une troisième plaquette stationnaire (153, 163),
un quatrième conducteur central (144) connecté à au moins une quatrième plaquette stationnaire (154, 164),
au moins une troisième plaquette mobile (223) et au moins une quatrième plaquette mobile (224),
l'au moins une troisième plaquette mobile (223) et l'au moins une quatrième plaquette mobile (224) sont connectées ensemble électriquement et mécaniquement par un second pont de plaquette mobile (226) qui est en outre connecté mécaniquement à un moyen d'entraînement (211) se déplaçant autour d'un axe central (219),
l'au moins une troisième plaquette stationnaire (153, 163) se trouve à proximité étroite de l'au moins une troisième plaquette mobile (223) et la quatrième plaquette stationnaire (154, 164) se trouve à proximité étroite de l'au moins une quatrième plaquette mobile (224), créant un couplage capacitif entre l'au moins une troisième plaquette stationnaire et l'au moins une troisième plaquette mobile, ainsi qu'entre l'au moins une quatrième plaquette stationnaire et l'au moins une quatrième plaquette mobile, générant ainsi une connexion par signal RF entre le troisième conducteur central et le quatrième conducteur central via les plaquettes stationnaires et mobiles,
et pour éviter un contact galvanique entre les plaquettes rotatives et stationnaires, les plaquettes sont revêtues d'une peinture sans contact spécifique d'un matériau époxy ou les plaquettes ont une couche isolante anodisée ou il y a un quelconque matériau plastique, tel qu'une feuille de PTFE entre les plaquettes.

3. Commutateur RF à intermodulation passive (PIM) basse selon la revendication 2,
**caractérisé en ce que**
dans un second état de couplage, l'au moins une deuxième plaquette stationnaire (152, 162) se trouve à proximité étroite de l'au moins une première plaquette mobile (221) et l'au moins une troisième plaquette stationnaire (153, 163) se trouve à proximité étroite de l'au moins une deuxième plaquette mobile (222), parvenant à un couplage capacitif entre l'au moins une deuxième plaquette stationnaire et l'au moins une première plaquette mobile, ainsi qu'entre l'au moins une troisième plaquette stationnaire et l'au moins une deuxième plaquette mobile, générant ainsi une connexion par signal RF entre le deuxième conducteur central et le troisième conducteur central via les plaquettes stationnaires et mobiles,
l'au moins une quatrième plaquette stationnaire (154, 164) se trouve à proximité étroite de l'au moins une troisième plaquette mobile (223) et la première plaquette stationnaire (151, 161) se trouve à proximité étroite de l'au moins une quatrième plaquette mobile (224), parvenant à un couplage capacitif entre l'au moins une quatrième plaquette stationnaire et l'au moins une troisième plaquette mobile, ainsi qu'entre l'au moins une première plaquette stationnaire et l'au moins une quatrième plaquette mobile, générant ainsi une connexion par signal RF entre le quatrième conducteur central et le premier conducteur central via les plaquettes stationnaires et mobiles.

4. Commutateur RF à intermodulation passive (PIM) basse selon la revendication 1,
**caractérisé en ce que**
l'au moins une première plaquette mobile (221) et l'au moins une deuxième plaquette mobile (222) sont des plaquettes rotatives.

5. Commutateur RF à intermodulation passive (PIM) basse selon la revendication 2 ou la revendication 3,
**caractérisé en ce que**
l'au moins une première plaquette mobile (221), l'au moins une deuxième plaquette mobile (222), l'au moins une troisième plaquette mobile (223) et l'au moins une quatrième plaquette mobile (224) sont des plaquettes rotatives.

6. Commutateur RF à intermodulation passive (PIM) basse selon la revendication 4 ou 5,
**caractérisé en ce que**
chacun ou au moins une plaquette ou une partie de plaquette est dans un plan orthogonal à l'axe de rotation.

7. Commutateur RF à intermodulation passive (PIM) basse selon l'une quelconque des revendications précédentes,
**caractérisé en ce que**
le premier pont de plaquette mobile (225) est plus étroit que l'au moins une première plaquette mobile (221) et l'au moins une deuxième plaquette mobile (222).

8. Commutateur RF à intermodulation passive (PIM) basse selon l'une quelconque des revendications 2, 3, 5 ou 6,
**caractérisé en ce que**
le second pont de plaquette mobile (226) est plus étroit que l'au moins une troisième plaquette mobile (223) et l'au moins une quatrième plaquette mobile (224).

9. Commutateur RF à intermodulation passive (PIM) basse selon l'une quelconque des revendications précédentes,
**caractérisé en ce que**
au moins une partie primaire de plaquette stationnaire (151, 152, 153, 154) et au moins une partie secondaire de plaquette stationnaire (161, 162, 163, 164) sont connectées à au moins un conducteur central (141, 142, 143, 144) formant un espace pour au moins une plaquette mobile (221, 222, 223, 224).

10. Commutateur RF à intermodulation passive (PIM) basse selon l'une quelconque des revendications 1 à 8,
**caractérisé en ce que**
au moins deux plaquettes mobiles (221, 222, 223, 224) forment un espace pour au moins une plaquette stationnaire (151, 152, 153, 154, 161, 162, 163, 164).

11. Commutateur RF à intermodulation passive (PIM) basse selon l'une quelconque des revendications précédentes,
**caractérisé en ce que**
les plaquettes mobiles ont un contour extérieur en forme d'arc concordant avec un contour intérieur des plaquettes stationnaires.

12. Commutateur RF à intermodulation passive (PIM) basse selon la revendication 1,
**caractérisé en ce que**
au moins une crête est prévue au niveau du logement entre deux plaquettes stationnaires.

13. Commutateur RF à intermodulation passive (PIM) basse selon l'une quelconque des revendications précédentes,
**caractérisé en ce que**
une unité d'entraînement (300) est prévue pour entraîner en rotation le moyen d'entraînement (211).

14. Commutateur RF à intermodulation passive (PIM) basse selon la revendication 13,
**caractérisé en ce que**
l'unité d'entraînement (300) comprend au moins l'un d'un moteur, d'un moteur pas-à-pas ou d'un solénoïde.

15. Commutateur RF à intermodulation passive (PIM) basse selon la revendication 13 ou 14,
**caractérisé en ce que**
l'unité d'entraînement (300) comprend un capteur de position pour indiquer la région de certaines positions de couplage discrètes et/ou pour indiquer quelle position de couplage a été atteinte.

16. Commutateur RF à intermodulation passive (PIM) basse selon la revendication 13, 14 ou 15,
**caractérisé en ce que**
l'unité d'entraînement (300) comprend un indicateur de position (311) qui indique les positions individuelles et/ou l'état de commutation du commutateur.
